# EUROPEAN PATENT APPLICATION

(11) **EP 1 698 994 A2**
(43) Date of publication of application: **06.09.2006**
(21) Application number: 06114737.7
(22) Date of filing: 21.03.2001
(51) Int. Cl.: G06F 21/00

(54) **Logging in**

(62) Divisional of application: 01916020.9
(71) Applicant: Anoto Group AB, 223 70 Lund (SE)
(72) Inventor: Fåhraeus, Christer, 237 35, Bjärred (SE); Ericson, Petter, 22149, Malmö (SE); Karlsson, Sven-Olof, 226 46, Lund (SE)
(74) Representative: Perklev, Karin Cecilia

(57) **Abstract**

A system for controlling a user's access to an access-protected unit (4). The system comprises a user unit (1) which is arranged to register at least one pair of coordinates, and checking means (2) which is arranged to check, on the basis of the coordinates, if the user is authorised to access the access-protected unit (4). If the user is authorised, the checking means is arranged to provide an enabling signal to the access-protected unit (4).

## Description

### Field of the Invention

The present invention relates to a system for controlling a user's access to an access-protected unit, a checking device for checking the access of a user to an access-protected unit, a method for controlling access, a computer program for performing the method and use of a position-coding pattern.

### Background of the Invention

To protect different types of systems and devices such as, for example, computers or other electronic equipment, against unauthorised persons, it is known to equip them with some type of access protection. A usual access protection for a computer consists in that a user must log in to the computer to be able to use it. On logging-in, the user enters his user identity and a password into the computer which checks this information against information stored earlier in order to determine if the user is authorised to use the computer. The disadvantage of this process is that a user must memorise his password which can be difficult since we surround ourselves with many systems which demand a logging-in process and since these often have different passwords. Many write down their password, with the consequence that, if someone finds the record, this person can get into the system associated with the password in a simple manner. If the user then also has the same password for several different systems, this can have far-reaching consequences.

In the Japanese document JP10222241 "Electronic Pen and System and Method for Individual Authentication", an electronic pen is described which is equipped with a gyrosensor which, when the user is writing his signature with the pen, senses features of the signature and produces a password by means of an algorithm.

It is also known from WO 99/48268 to replace the PIN code in a mobile communication unit with a signature which the user writes with the communication unit. The communication unit is equipped with a sensor of the gyrosensor or pressure-ball type which senses the movement when the user is writing with the unit.

One problem of the above-mentioned techniques is that a signature is not especially difficult to forge.

### Summary of the Invention

It is therefore an object of the invention to provide a system which enables simple and reliable checking of the access to an access-protected unit.

This object is achieved with a system according to claim 1, a checking device according to claim 13, a method according to claim 23, a computer program according to claim 30 and use according to claim 31.

More specifically, the invention provides, according to a first aspect, a system for checking the access of a user to an access-protected unit, the system comprising a user unit which is arranged to register at least one pair of coordinates, and checking means which is arranged to check, on the basis of said one pair of coordinates, if the user is authorised to access the access-protected unit and, if yes, to provide an enabling signal to the access-protected unit.

The invention is based on the concept of using a new parameter, namely coordinates, as a basis for checking the access to an access-protected unit. An advantage of a system which is based on coordinates is that, as will be seen below, it can be constructed with varying degrees of security, from a very simple system where it is enough to register a correct pair of coordinates, to a very secure system where both, for example, a correct pair of coordinates and a correct signature and/or the identity of the user must be registered.

Coordinates are especially suitable for being used as a basis for access control when the access-protected unit lacks a keyboard, since coordinates can be registered, for example, by being read with a sensor.

For example, the coordinates can be advantageously registered by the user unit optically reading a position-coding pattern which codes coordinates for a plurality of points. Access to an access-protected unit can then be obtained by the user registering coordinates for points within a particular coordinate area.

Coordinates are also specially suitable for being used as parameters for access-control in systems for electronic registration of handwriting since handwritten text which is written on a writing surface with position-coding patterns can be registered electronically as a sequence of coordinates by continuous reading of the position-coding pattern. Position-coding patterns which can be used for registering handwritten text are described in, for example, US 5,852,434 and Applicant's Patent Applications WO 00/73983 and PCT/SE00/1667 the contents of which is included in the present specification by reference. Moreover, reference is made to WO 01/16691, the content of which is included in the present specification by reference. At least the position-coding patterns described in Applicant's patent applications can code coordinates for a very large number of positions on an imaginary surface. Different coordinate areas can then be allocated to different users and the position-coding pattern which corresponds to the coordinate area can be imaged on a personal card or the like which is allocated to the user. He can only access a certain access-protected unit by reading coordinates from this card.

The access-protected unit is a unit which is to be protected from unauthorised persons. Examples of access-protected units are computers, buildings, vehicles, web pages and different types of electronic equipment.

In one embodiment of the system according to the invention, the checking means is thus arranged to check if the coordinates are lying within a predetermine coordinate area for checking the authorisation of the user.

As a very simple example, a hand-held scanner or digital pen can be envisaged for electronic registration of handwriting, where the owner can only log in by registering coordinates from a card which he has obtained with the purchase of the scanner/pen. In this case, the checking means is located in the scanner/pen and only needs to have information on the extent of the predetermined coordinate area and to check that the registered coordinates are lying within this field.

Logging-in on different scanners/pens can require coordinates from different coordinate areas.

The coordinate area is defined in advance and can, for example, be defined as lying within determined coordinates which represent the corners of the field.

In an advantageous embodiment of the system, the user unit is arranged to register a user signature as a sequence of coordinates which describe the displacement of the user unit when a user is writing the user signature with the user unit and said at least one pair of coordinates comprise the sequence of coordinates.

An advantage of the user writing his signature is that the security increases. The signature is normally the signed name of the user but can also be a symbol or any type of sign. For an unauthorised person to be able to log in to the access-protected unit, both access to the coordinate area and signature of the authorised user are required in this case. This higher security can be implemented without the hardware of the system needing to be changed, since registration of the signature and registration of the coordinates can be done with the same technology.

The checking means is suitably arranged to compare the sequence of coordinates which thus represent the registered signature, with a previously stored sequence of coordinates for checking the authorisation of the user. The enabling signal for the access-protected unit is only given if the sequences correspond to the desired extent.

In one embodiment of the system, the user unit has a unique identification code and the checking means is arranged to check the authorisation of the user with said identification code in combination with said at least one pair of coordinates.

By checking not only the coordinates but also the identification code the security of the system will increase. If for example the coordinates are imaged on a card and this card is stolen, the thief can not have access to the access-protected unit without the associated user unit. The identification code can be an identification number such as PIN (Personal Identification Number), a symbol or any type of sign.

In another embodiment of the system the user unit is arranged to register a sequence of coordinates which is associated to a specific access-protected unit.

For example the user can write different commands with the user unit and the user unit then register this as sequences of coordinates. Depending on what commands the user is writing different access-protected units can be enabled. In this way the user can use the same equipment to log-in to different physical units. The user unit, the checking means and the access-protected unit can be physically placed in different ways with respect to one another.

The checking means can be physically integrated with the user unit, with the access-protected unit or be self-contained. The checking means can also be physically divided, which implies that a certain part of the authorisation check is done in one place and another part of the authorisation check is done in another place. For example, a first check can be done in the user unit and a second check in the access-protected unit.

When the checking means is self-contained, they can be used jointly for a plurality of user units and a plurality of access-protected units. They then become more complicated and need to have a greater memory and processing capacity, among other things.

When the checking means is integrated with the user unit, they only need to check users of the access-protected unit or units which can be accessed via the user unit.

In one embodiment of the system, the access-protected unit is integrated with the user unit.

The access then applies to the user unit itself, the user unit and the access-protected unit can being seen as one and the same unit. In this case, the user starts the unit and must then carry out a logging-in, during which he can only use the functions of the unit which are required for logging-in, i.e. registration of coordinates and possibly other logging-in parameters. The functions which are accessible during logging-in can be said to correspond to the user unit whilst the remaining functions which become accessible only after correct logging-in can be said to correspond to the access-protected unit.

The checking means can be, but do not have to be, integrated with the user unit and the access-protected unit.

As an alternative, the access-protected unit can be isolated from the user unit. It can be integrated with the checking means.

In an advantageous embodiment of the system, the access-protected unit is a digital pen which can be used for digitising handwritten text.

As already mentioned, the checking means can be common to a number of user units which send the registrated coordinates to the checking means. In this embodiment of the system, the information stored in the checking means relates to a plurality of coordinate areas. The checking means can be, for example, web-based and reached via a computer network.

Each coordinate area can be associated with one or more users and/or one or more access-protected units. In the former case, a number of users can thus reach a unit by registering coordinates from one and the same predetermined field. This can be desirable, for example, if the access-protected unit is a computer which a number of persons are to be able to use, or premises which a number of persons are to be able to gain entry to. In the latter case, for example, a person can access different access-protected units by registering coordinates from one and the same predetermined coordinate area. For example, a person can wish to log in to different apparatuses via a standard logging-in process.

In an embodiment of the system, the access-protected unit is associated with at least one of said plurality of coordinate areas.

The coordinates which are registered by the user unit control for which access-protected unit the access is intended. This results in a simple and flexible way of obtaining access to a certain access-protected unit. Different coordinate areas can be associated with different access-protected units. A coordinate area can also be associated with more than one access-protected unit, but then the user has to indicate in some way which access-protected unit he wishes to access.

In one embodiment of the system, if the user is authorised to access the access-protected unit, the access-protected unit is arranged to start at least one function associated with at least one of said plurality of coordinate areas.

One advantage with this is that it saves the user time when he is logging-in to an access-protected unit. The user can initially decide which functions he wishes to start when he is logging in. This set ups can be changed when the user is logged in. Function includes different kinds of applications and programs. In one embodiment of the system, there is at least one authorised user identity which is associated with at least one of said plurality of coordinate areas.

The coordinates which are registered by the user unit here control the user identity. Within the coordinate area which is associated with at least one authorised user, there can also be subareas which are associated with different access-protected units. The advantage of this is that if someone can forge a signature, he must also have access to the base with the predetermined coordinates which are associated with the signature.

In one embodiment, the system comprises a base which is provided with a position-coding pattern which enables coordinates to be determined and from which the user unit is arranged to register said at least one pair of coordinates.

Different coordinates are registered depending on where on the base the user places the user unit. The coordinates can be allocated different meanings. The base can be divided into different coordinate areas in which the user writes his signature or only places the user unit. Depending on which coordinate area the user is selecting, for example, access to different units can be carried out. This results in a quick and flexible activation of the access-protected unit for the user.

In one embodiment, the user unit comprises an optical sensor and image-processing means for registering said at least one pair of coordinates.

The optical sensor obtains images and the image-processing means process the images, which comprises determination of the coordinates from the content of the images, which content can be the above-mentioned position-coding pattern.

According to a second aspect, the invention also provides a checking device for checking a user's access to an access-protected unit, information about at least one coordinate area being stored in the checking device, the checking device being arranged to receive at least one pair of coordinates from a user unit, which belongs to the user, to check, on the basis of the received coordinates, if the user is authorised to access the access-protected unit and, if yes, to provide an enabling signal to an access-protected unit.

The advantage of the checking device is apparent from the above discussion of the system and its checking means.

According to a third aspect, the invention also provides a method for controlling access to an access-protected unit with the aid of a user unit, comprising the steps of registering at least one pair of coordinates from a base by means of the user unit, checking with the checking means and on the basis of the registered coordinates, if the user is authorised to access the access-protected unit, and, if yes, providing an enabling signal to the access-protected unit.According to a fourth aspect, the invention also provides a method for checking authorisation to an access-protected unit comprising the steps of receiving at least one pair of coordinates from a user unit which belongs to a user, checking on the basis of the received coordinates, if the user is authorised to access the access-protected unit, and if yes, providing an enabling signal to the access-protected unit.

According to a fifth aspect of the invention, this provides a computer program which is stored on a computer-readable storage medium which comprises instructions for causing the computer to carry out a method according to any one of claims 23-29.

According to a sixth aspect, the invention provides use of a position-coding pattern which codes coordinates for controlling access to an access-protected unit.

The advantages of the methods, the computer program and the use are apparent from the above discussion. The features which have been discussed with respect to the system also apply in suitable parts to the checking device, the method, the computer program and the use.

### Brief Description of the Drawings

The invention will be described in greater detail in the text which follows, by means of embodiments and referring to the accompanying drawings, in which
Fig. 1 shows a system according to a first embodiment of the present invention, which system comprises a digital pen and a coordinate base.
Fig. 2 shows an example of a second embodiment of a system according to the invention, which system comprises a user unit and a logging-in card.
Fig. 3 schematically shows an example of a storage structure for storing, among other things, checking information in a checking device which is used in a system according to the invention.
Fig. 4 shows a flow chart of a logging-in method according to one embodiment of the invention.
Fig. 5 schematically shows another example of a storage structure for storing, among other things, checking information in a checking device which is used in a system according to the invention.

### Description of Preferred Embodiments

In the text which follows, two examples are given of how the invention can be implemented. The first example relates to access to a digital pen. The second example relates to access to a computer. In the first example, the whole system for controlling access to the digital pen is integrated with the digital pen. In the second example, the system for access control is separate from the access-protected unit, i.e. the computer.

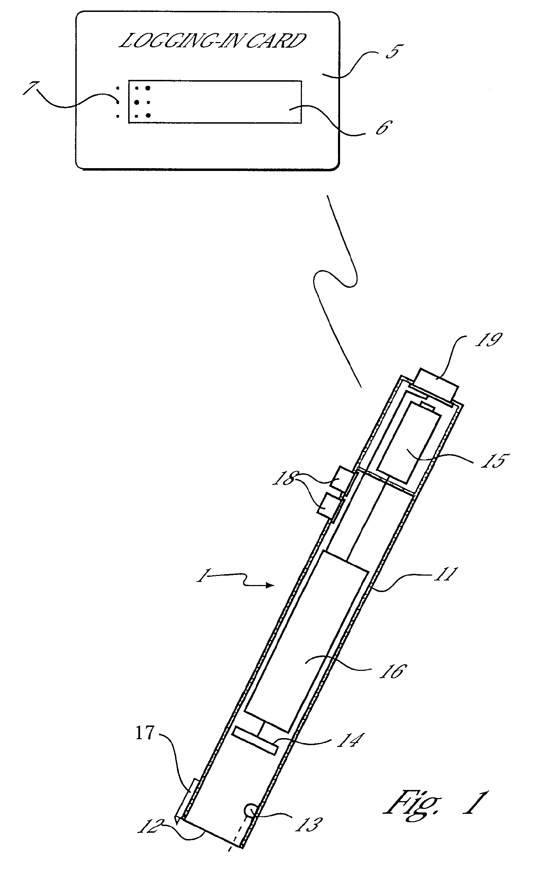

Fig. 1 shows a digital pen 1 and a coordinate base 5. The digital pen 1 can be used as a normal.pen, with the difference that the text which is written can be obtained in digital form in the pen. To protect the pen against unauthorised users, it is provided with a system for controlling access to it (a logging-in system).

### Logging-in Card

Fig. 1 shows an example of a logging-in card 5 which in this case is similar to a normal magnetic or credit card with respect to size and material. The logging-in card 5 has a writing field 6 which may have a size of 10 mm times 200 mm and can be provided with coordinates which can be read by the digital pen 1. The coordinates can be specified in explicit or coded form. In this example, the logging-in card 5 is provided with coordinates which are coded with the aid of a position-coding pattern 7. The pattern 7 is shown schematically as a number of dots on a part of the logging-in card 5.

The writing field 6 is intended for the user's signature. The logging-in card can be made of such a material that the signature can be erased after having been written. As an alternative, the combination of pen and logging-in card can be such that no pigment is deposited on the logging-in card when the user is writing the signature.

The position-coding pattern 7 has the characteristic that, if an arbitrary part of the pattern is registered with a certain minimum size, its position in the position-coding pattern and thus the logging-in card 5 is determined unambiguously.

The position-coding pattern 7 can be of the type shown in US 5,852,434 where each position is coded by a specific symbol.

However, the position-coding pattern 7 is advantageously of the type shown in Applicant's above-mentioned Applications WO 00/73983 and PCT/SE00/01667, where each position is coded by a plurality of symbols and each symbol contributes to the coding of a number of positions. The position-coding pattern 7 is built up of a small number of types of symbol. An example is shown in PCT/SE00/01667, where a larger dot represents a "one" and a smaller dot represents a "zero". Another example is shown in WO 00/73983, where four different displacements of a dot in relation to a raster point code four different values.

### Digital Pen

The digital pen 1 in Fig. 1 comprises a casing 11. In the short side of the casing, an opening 12 is located.

The casing contains mainly an optical part, an electronic part and a power supply.

The optical part comprises at least one light-emitting diode 13 for illuminating the surface which is to be imaged and a light-sensitive area sensor 14, for example a CCD or CMOS sensor, for registering a two-dimensional image. The pen may also contain a lens system.

The power supply for the pen is obtained from a battery 15 which is mounted in a separate compartment in the casing 11.

The electronic part contains a processor 16 which is programmed for recording an image from the sensor 14, identifying symbols in the image, determining which one pair of coordinates the symbols are coding and storing these coordinates in its memory. The processor 16 is also programmed for analysing the stored pairs of coordinates and converting them to a polygon train which constitutes a description of how the user unit is displaced over a surface which is provided with the position-coding pattern, which displacement, for example, can represent the user's signature or some other form of handwritten information.

The pen 1 also comprises a pen point 17 with the aid of which the user can write normal pigment-based writing which, at the same time as it is written, is registered digitally by the pen 1 with the aid of the position-coding pattern. The pen point 17 can be retracted and extended so that the user can control if it is to be used or not.

The pen 1 also comprises buttons 18 with the aid of which the unit is activated and controlled. It also has a transceiver 19 for wireless communication, for example by IR light or radio waves, with external units.

### Logging-in with the Aid of the Pen

As mentioned, the pen 1 is provided with a logging-in system. When the pen is switched on, the user must log in in order to be able to use it. To handle the logging-in, the pen 1 is provided with a logging-in program. Moreover, information regarding at least the user's specific coordinate area is stored in the memory.

In a first example, the access-unit is the digital pen 1 which also comprises the checking means which comprise a memory in which coordinate areas and associated user identities are stored. Several users can have authorisation for the pen 1. Each user can have his own logging-in card 5. The logging-in card 5 can be a card which the user carries with him, for example in his wallet. When a user wishes to log in to the digital pen 1, he places it on the writing field 6 of the logging-in card 5, which is provided with a position-coding pattern 7 which is unique to the user. A part of the pattern is recorded optically by the digital pen 1. A program converts the pattern into coordinates which are transferred to the checking means. The checking means checks that the coordinates are lying within a predetermined coordinate area belonging to an authorised user. If yes, the user obtains access to the functions of the digital pen 1. Different users have different coordinate areas, which entails that it is possible to control which programs different users are to be able to access by the pen starting a different program depending on into which coordinate area the registered coordinates get. To increase security on logging-in, it can be required that a user writes his signature in the writing field. The signature is transferred to the checking means as a sequence of coordinates. The checking means also checks, in addition to the field within which the coordinates are located, if the sequence of coordinates for this coordinate area corresponds to an authorised sequence stored in the memory. It is then not enough that an unauthorised person obtains the writing base and pen, but the unauthorised person must also be able to forge the signature of the authorised user in order to gain access to the functions of the pen.

### Logging-in to Computer

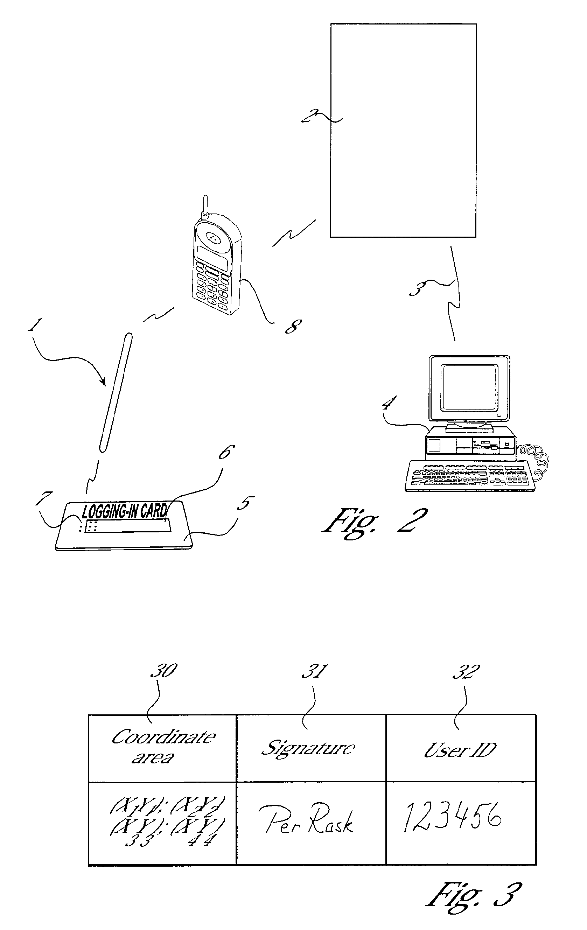

Fig. 2 shows a second embodiment of the invention, in which the access-protected unit is a computer 4, the user unit is a digital pen 1 and the checking means is available on the web in the form of a server unit 2. The server unit 2 handles a plurality of digital pens 1 and a plurality of computers 4.

The digital pen 1 is arranged to transfer information which is generated by the user to the server unit 2. In this example, the information is transferred wirelessly to a network-access unit 8 which, in turn, transfers the information to the server unit 2. The network-access unit 8 is a mobile telephone in this example. As an alternative, it can be a computer or some other suitable unit which has an interface with a network, for example the Internet or a local company network. As an alternative, the network-access unit can constitute an integrated part of the user unit.

The server unit 2 is a computer in a network of computers. It is constructed as a traditional server unit with one or more processors, memory of different types, peripheral units and couplings to other computers in the network but it has new software for carrying out the functions described here. It also has information stored in its memory in order to be able to handle these functions.

In the memory of the server unit 2, information on the coordinate areas is stored. The coordinate areas can be of different size and have different shape. A rectangular coordinate area, for example, can be described with the aid of pairs of coordinates which represent points in the corners of the coordinate area. The writing field 6 on the logging-in card 5 occupies one coordinate area.

In a data structure in the memory of the server unit 2, information or rules for each coordinate area are found which define how the information which can be associated with the coordinate area is to be processed.

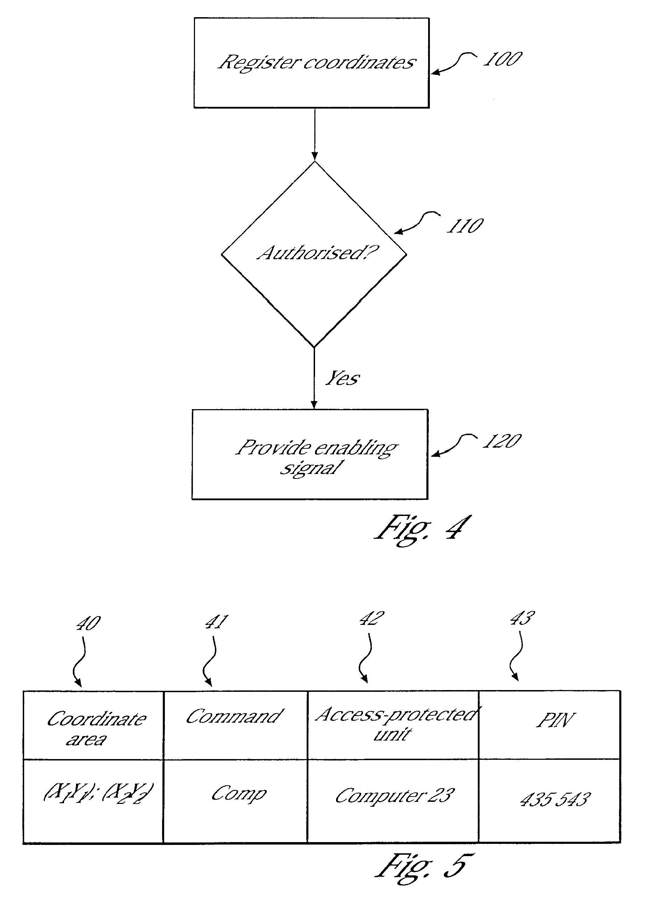

Fig. 3 shows an example of such a structure which here constitutes a table. In a first column 30 of the table, the coordinate areas are defined with the aid of the coordinates (x1, y1; x2,y2; x3,y3; x4,y4) for the corners of the coordinate area which have been assumed to be rectangular in this case. In a second column 31, a representation of the signature of the authorised user is stored so that the server unit 2 can compare a received signature with a signature stored earlier. In a third column 32, a user identity is stored in the form of a serial number for the user unit 1 of the authorised user. Naturally, this is a very simple structure which is only used for illustrating the principles. Considerably more complex structures and rules for security checking are conceivable.

Fig. 4 shows a flow chart of the following embodiment of the method. When a user wishes to obtain access to a computer 4, he places the digital pen 1 on the writing field 6 and the pen 1 registers 100 the pattern 7 and calculates corresponding coordinates. The coordinates, together with a user identity stored in the user unit 1, are forwarded via the mobile telephone 8 to the server unit 2. The server unit 2 checks to which coordinate area the registered coordinates belong. Each computer 4 in the system is associated with at least one coordinate area. The server unit 2 determines in this way for which computer the access is intended. The server unit 2 then checks that the user identity has the authority 110 to log in to the computer for which the logging-in is intended. If the user has authority, a signal 120 is sent to the computer 4 for which the access is intended, which results in the user now being logged in to the computer 4. It is possible to send along special information from the server unit to the computer 4 concerned. This special information can comprise user-specific information which, for example, starts programs specific to the user. It can also be that different users obtain access to different amounts of information on the computer 4, which has the result that only certain parts of the content of the computer 4 are opened up to the user. If the user does not have authorisation for the computer 4, a message about this can be sent to the digital pen 1.

To increase the security in the system, the user also writes his signature on the writing field 6 of the logging-in card 5. The signature is registered as a sequence of coordinates and, together with the user identity stored in the user unit, is forwarded via the mobile telephone 8 to the server unit 2. The server unit 2 compares the received sequence of coordinates, i.e. the signature, with a previously stored sequence of coordinates with the user identity. If the received signature is determined to correspond, a signal is sent to the computer 4 and the user is logged in.

It is also possible to arrange the checking means in the computer 4, i.e. the access-protected unit.

### Logging-in to different entities

A third embodiment of the invention is similar to the second embodiment but in this embodiment the user can log-in to different physical entities and by writing a certain command chose which entity to log-in to. The writing field 6 is in this embodiment used to write a certain command associated with a certain physical entity for example a computer. In this embodiment the digital pen has a unique PIN (Personal Identification Number).

The digital pen is arranged to transfer the unique PIN and information, generated by the user, to the server unit.

In the memory of the server unit, information of the coordinate areas, commands and PINs are stored.

In a data structure in the memory of the server unit 2, information or rules for each coordinate area are found which defines how the coordinate area is to be processed.

Fig. 5 shows an example of such a structure which constitute a table. In a first column 40 of the table, the coordinate areas are defined with the aid of the coordinates (x1, y1; x2,y2) for determine the corners of the coordinate area which have been assumed to be rectangular in this case. In a second column 41, a representation of a command associated with an access-protected unit, which is represented in column 42, is stored. In a fourth column 43, a PIN is stored so that the server unit 2 can compare a received PIN with a PIN stored earlier. Naturally, this is a very simple structure which is only used for illustrating the principles. Considerably more complex structures and rules for security checking are conceivable.

When a user wishes to obtain access to a computer 4, he places the digital pen 1 on the writing field 6 and the pen registers the pattern 7 and calculates corresponding coordinates. The user writes the command "comp" to log-in to the computer. The pen registers the written command and calculates the relative corresponding coordinates. The pen then forwards the coordinates and the PIN "435 543" of the digital pen 1 via the mobile phone 8 to the server unit 2. The server unit checks to which coordinate area the registered coordinate belong. Each user in the system is associated with at least one coordinate area. The server unit then checks the command "comp" to determine which physical unit the user is logging in to. In this case "comp" is associated with "Computer 23". Thereafter it checks the PIN to determine if this pen in combination with the pattern 7 is allowed to have access to "Computer 23". If access is allowed the server unit 2 sends a signal to "Computer 23" and the user is logged in.

### Non-recurrent Code

A predetermined coordinate area on a writing base can also function as a non-recurrent field which, after having been used once, is used up. This can be applicable, for example, when it is wished to be able to discard the writing base after use or when it is wished to keep it as a receipt for access to the system. It can be that the signature is also written on the base with ink, with the result that if an unauthorised person finds the slip, it can be relatively simple for him to follow the written signature and in this way obtain access to the access-protected unit. If, on the other hand, this pattern is used up, the only information remaining is the signature of the user.

Although special embodiments of the invention have been described above, it is obvious to a person skilled in the art that it is possible to produce many alternatives, modifications and variations in the light of the above description.

## Claims

1. A system for controlling a user's access to an access-protected unit (4), **characterised in that** the system comprises a user unit (1) which is arranged to register at least one pair of coordinates, and checking means (2) which is arranged to check, on the basis of said one pair of coordinates, if the user is authorised to access the access-protected unit (4), and if yes, to provide an enabling signal to the access-protected unit (4).

2. A system according to claim 1, wherein the checking means (2) is arranged to check if the coordinates are lying within a predetermined coordinate area for checking the authorisation of the user.

3. A system according to claim 1 or 2, wherein the user unit (1) is arranged to register a user signature as a sequence of coordinates which describe displacement of the user unit when a user is writing the user signature with the user unit (1), and wherein said at least one pair of coordinates comprise the sequence of coordinates.

4. A system according to claim 3, wherein the checking means (2) is arranged to compare the sequence of coordinates with a previously stored sequence of coordinates for checking the authorisation of the user.

5. A system according to any one of the preceding claims, wherein the user unit (1) has a unique identification code and the checking means is arranged to check the authorisation of the user with said identification code in combination with said at least one pair of coordinates.

6. A system according to claim 5, wherein the user unit is arranged to register a sequence of coordinates which is associated to a specific access-protected unit.

7. A system according to any one of the preceding claims, wherein the checking means (2) is integrated with the user unit (1).

8. A system according to any one of the preceding claims, wherein the access-protected unit (4) is integrated with the user unit (1).

9. A system according to any one of the preceding claims, wherein the access-protected unit (4) is a digital pen.

10. A system according to any one of the preceding claims, wherein information about a plurality of coordinate areas is stored in the checking means (2).

11. A system according to claim 10, wherein the access-protected unit (4) is associated with at least one of said plurality of coordinate areas.

12. A system according to claim 10, wherein if the user is authorised to access the access-protected unit (4), the access-protected unit (4) is arranged to start at least one function associated with at least one of said plurality of coordinate areas.

13. A system according to claim 10, 11 or 12, wherein at least one authorised user identity is associated with at least one of said plurality of coordinate areas.

14. A system according to any one of the preceding claims, furthermore comprising a base (5) which is provided with a position-coding pattern (7) which enables calculation of coordinates to be carried out and from which the user unit (1) is arranged to register said at least one pair of coordinates.

15. A system according to any one of the preceding claims, wherein the user unit (1) comprises an optical sensor and image-processing means for registering said at least one pair of coordinates.

16. A checking device (2) for checking a user's access to an access-protected unit (4), **characterised in that** information about at least one coordinate area is stored in the checking device (2), the checking device (2) being arranged to receive at least one pair of coordinates from a user unit (1) which belongs to the user, to check, on the basis of the received coordinates, if the user is authorised to access the access-protected unit (4) and, if yes, to provide an enabling signal to the access-protected unit (4).

17. A checking device according to claim 16, furthermore arranged to check if the coordinates are lying within a predetermined coordinate area for checking the user's authorisation.

18. A checking device according to any one of claims 16-17, furthermore arranged to receive a sequence of coordinates from a user unit (1), wherein said at least one pair of coordinates comprise the sequence of coordinates.

19. A checking device according to claim 18, further arranged to compare the sequence of coordinates with a previously stored sequence of coordinates for checking the user's authorisation.

20. A checking device according to any one of claims 16-19, wherein information about at least one identification code is stored in the checking device (2), the checking device (2) being arranged to receive at least one identification code from the user unit (1), to check in combination with said at least one pair of coordinates.

21. A checking device according to claim 20, wherein information about at least one sequence of coordinates, which is associated to a specific access-protected unit, is stored in the checking device (2), wherein the checking device (2) being arranged to receive at least one sequence of coordinates from the user unit (1), to determine which access-protected unit the user is trying to access.

22. A checking device according to any one of claims 16-21, wherein the checking device (2) is integrated with the user unit (1).

23. A checking device according to any one of claims 16-22, in which information about a plurality of coordinate areas is stored.

24. A checking device according to claim 23, wherein he access-protected unit (4) is associated with more than one of said plurality of coordinate areas.

25. A checking device according to claim 23 or 24, wherein at least one authorised user identity is associated with at least one of said plurality of coordinate areas.

26. A checking device according to any one of claims 16-25, which is a server unit (2).

27. A checking device according to claim 26, wherein the communication between the user unit (1), the checking device (2) and the access-protected unit (4) takes place in a computer network (3).

28. A method for controlling access to an access-protected unit (4) with the aid of a user unit (1), comprising the steps of:
registering at least one pair of coordinates from a base (5) by means of the user unit (1),
checking, with checking means (2), if the user is authorised as to access the access-protected unit (4), and
if yes, providing an enabling signal to the access-protected unit (4).

29. A method according to claim 28, further comprising the step of checking if the coordinates are lying within a predetermined coordinate area for checking the user's authorisation.

30. A method according to claim 28 or 29, wherein the step of registering at least one pair of coordinates by means of the user unit (1) comprises the step of registering, by means of the user unit (1), a sequence of coordinates which describes the displacement of the user unit (1) when a user is writing the user signature with the user unit (1).

31. A method according to claim 30, further comprising the step of comparing the sequence of coordinates with a previously stored sequence of coordinates for checking the user's authorisation.

32. A method according to any one of claims 28-31, further comprising the step of receiving an identification code of the user unit and checking if the identification code is authorised as to access the access-protected unit (4).

33. A method according to claim 32, wherein the step of registering at least one pair of coordinates by means of the user unit (1) comprises the step of registering, by means of the user unit (1), a sequence of coordinates which describes the displacement of the user unit (1), and comparing the sequence of coordinates with a previously stored sequence of coordinates for checking which access-protected unit the user tries to access.

34. A method according to any one of claims 28-33, further comprising the step of determining to which predetermined coordinate area the coordinates belong.

35. A method according to claim 34, further comprising the step of determining, from the association of the coordinate area, for which access-protected unit (4) the access is intended.

36. A method according to claim 34 or 35, further comprising the step of determining, from the association of the coordinate area, if the user has authorisation for the access-protected unit (4) for which the access is intended.

37. A method for checking authorisation to an access-protected unit comprising the steps of:
receiving at least one pair of coordinates from a user unit which belongs to a user,
checking on the basis of the received coordinates, if the user is authorised to access the access-protected unit, and if yes,
providing an enabling signal to the access-protected unit.

38. A method according to claim 37, wherein the checking comprises the step of checking if the coordinates are lying within a predetermined coordinate area for checking the user's authorisation.

39. A method according to claim 37 or 38, wherein the step of checking comprises the step of receiving an identification code and comparing said identification code with at least one identification code stored earlier for checking the user's authorisation.

40. A method according to any of claims 37-39, wherein the receiving comprises the step of receiving a sequence of coordinates from the user unit (1).

41. A method according to claim 40, wherein the checking comprises the step of comparing the sequence of coordinates with a previously stored sequence of coordinates for checking the user's authorisation.

42. A method according to claim 40, further comprising the step of receiving an identification code and comparing said identification code with at least one identification code stored earlier for checking the user's authorisation.

43. A method according to claim 42, further comprising the step of comparing the sequence of coordinates with a previously stored sequence of coordinates for checking which access-protected unit the user is trying to access.

44. A computer program which is stored on a computer-readable storage medium and which comprises instructions for causing the computer (4) to carry out one of the methods according to claims 28-36.

45. A computer program which is stored on a computer-readable storage medium and which comprises instructions for causing the computer (4) to carry out one of the methods according to claims 37-43.

46. Use of a position-coding pattern (7) which enables coordinates to be calculated, for controlling the access to an access-protected unit (4).
